(19)

Europäisches
Patentamt

European
Patent Office

Office européen
des brevets

(11) **EP 4 679 735 A1**

(12) **EUROPEAN PATENT APPLICATION**

(43) Date of publication:
**14.01.2026 Bulletin 2026/03**

(21) Application number: **24188022.8**

(22) Date of filing: **11.07.2024**

(51) International Patent Classification (IPC):
**H04B 17/00** (2015.01)     **H04B 17/21** (2015.01)

(52) Cooperative Patent Classification (CPC):
**H04B 17/0085; H04B 17/22; H04B 17/253**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Rohde & Schwarz GmbH & Co. KG
81671 München (DE)**

(72) Inventors:
• **Gemmer, Thomas
  81671 München (DE)**
• **Bette, Fabian
  81671 München (DE)**

(74) Representative: **Prinz & Partner mbB
Patent- und Rechtsanwälte
Rundfunkplatz 2
80335 München (DE)**

(54) **OVER-THE-AIR MEASUREMENT SYSTEM AND METHOD**

(57)     An over-the-air, OTA, measurement system (10) for testing a passive radio frequency, RF, structure (16) is described. The OTA measurement system (10) comprises a positioner unit (26) that is configured to hold the passive RF structure (16) in an adaptable position. The OTA measurement system (10) further comprises at least one test and/or measurement instrument (12), wherein the at least one test and/or measurement instrument (12) is configured to generate a stimulus RF signal. The OTA measurement system (10) further comprises at least one RF antenna (28) being connected to the at least one test and/or measurement instrument (12), wherein the at least one RF antenna (28) is configured to transmit the stimulus RF signal to the passive RF structure (16) in a first polarization and/or in a second polarization. The at least one RF antenna (28) is further configured to receive a reflected signal from the passive RF structure (16) in the first polarization and/or in the second polarization. The at least one test and/or measurement instrument (12) further is configured to obtain measurement data based on the stimulus RF signal and the reflected signal. The OTA measurement system (10) comprises an analysis module (34), wherein the analysis module (34) is configured to determine a corrected equivalent source of the passive RF structure (16) based on a distance between the at least one RF antenna (28) and the passive RF structure (16) and based on the measurement data, wherein the corrected equivalent source is corrected for an influence of the at least one RF antenna (28). Further, an OTA measurement method is described.

**Fig. 1**

EP 4 679 735 A1

**Description**

The present invention generally relates to an over-the-air, OTA, measurement system. The present invention further relates to an OTA measurement method.

A reconfigurable intelligent surface (RIS) reflects an impinging RF signal into a certain, configurable direction, thereby allowing to shape the path of travel of the RF signal. In other words, RISs allow for passive beamforming of RF signals.

RISs can be utilized in order to extend the range of wireless communication devices as well as in order to enhance the quality of data links between wireless communication devices by appropriately adapting lobes of the RF signal to a location of the respective wireless device.

In fact, RISs may be a key technology for upcoming wireless communication standards such as 6G.

Like for other devices employed in wireless communication, there is a need to test RISs with respect to their operational properties, such as their beamforming capabilities.

For example, RISs or other passive RF structures are tested by a bistatic antenna over-the-air (OTA) measurement system comprising a feed antenna transmitting an RF signal to the RIS, and a probe antenna receiving a reflected signal from the RIS, wherein both antennas are arranged in a far-field region of the RIS. However, the spatial requirements for this type of measurements is rather large.

As another example, passive RF structures may be tested using a compact antenna test range (CATR), wherein the far-field conditions are obtained by a reflector that is provided in the signal path between the RF antenna and the RIS. While reducing the spatial requirements, these methods require additional equipment such as the reflector(s).

The object of the present invention is to provide a OTA measurement system and an OTA measurement method that are more efficient with respect to manufacturing costs and/or spatial requirements.

According to the present invention, the problem is solved by an over-the-air, OTA, measurement system for testing a passive radio frequency, RF, structure. The OTA measurement system comprises a positioner unit that is configured to hold the passive RF structure in an adaptable position, wherein the positioner unit is configured to modify the adaptable position. The OTA measurement system further comprises at least one test and/or measurement instrument, wherein the at least one test and/or measurement instrument is configured to generate a stimulus RF signal. The OTA measurement system further comprises at least one RF antenna being connected to the at least one test and/or measurement instrument, wherein the at least one RF antenna is configured to receive the stimulus RF signal from the test and/or measurement instrument, and to transmit the stimulus RF signal to the passive RF structure in a first polarization and/or in a second polarization. The at least one RF antenna is further configured to receive a reflected signal from the passive RF structure in the first polarization and/or in the second polarization, and to transmit the received reflected signal to the test and/or measurement instrument. The at least one test and/or measurement instrument further is configured to obtain measurement data based on the stimulus RF signal and the reflected signal. The OTA measurement system comprises an analysis module, wherein the analysis module is configured to determine a corrected equivalent source of the passive RF structure based on a distance between the at least one RF antenna and the passive RF structure and based on the measurement data, wherein the corrected equivalent source is corrected for an influence of the at least one RF antenna.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Further, the passive RF structure is understood to comprise at least one passive RF module, i.e. at least one RF module that does not generate electromagnetic waves by itself, and that is configured to reflect impinging electromagnetic waves in a certain defined manner.

The passive RF structure may comprise capacitors, inductances, and/or resistors that may be reconfigurable.

The passive RF structure may comprise or be connected to a control module that is configured to adapt capacitances, inductances, and/or resistances of individual portions (such as unit cells) of the passive RF structure, such that reflectivity properties of the passive RF structure are modified.

The term "position" is understood to denote a location, e.g. a x, y, and z coordinate, and an orientation, e.g. in terms of Euler angles.

Further, the term "equivalent source" is understood to denote a mathematical model of the respective object, particularly of the passive RF structure, that is based on a physical replacement model of the respective object and that has the same electromagnetic properties as the object, particularly as the passive RF structure.

For example, the equivalent source may be or comprise equivalent currents, particularly equivalent surface currents, and/or a spherical mode expansion of a transmission, receiving, and/or reflectivity pattern of the respective object. Particularly, the expansion may be in terms of spherical harmonics.

The equivalent currents and/or the spherical mode expansion may be defined on a minimal surface surrounding the respective object, particularly on a minimal sphere.

The OTA measurement system according to the present invention is based on the idea to determine an equivalent source of the passive RF structure, and to correct the determined equivalent source for the influence of the at least one RF antenna on the measurements conducted.

In fact, the determined equivalent source(s) may be corrected for a known transmission and/or receiving pattern of the at least one RF antenna.

This allows to perform the measurements with the at least one RF antenna, i.e. transmitting the stimulus RF signal to the passive RF structure and receiving the corresponding reflected signal(s), with the at least one RF antenna being positioned in the near-field of the passive RF structure, particularly in a radiating near-field region.

In other words, the adaptable position may be such that the passive RF structure is in a near-field region, particularly in a radiating near-field region, of the at least one RF antenna. Likewise, the at least one RF antenna may be in a near-field region, particularly in a radiating near-field region, of the passive RF structure.

Accordingly, the spatial requirements for performing the OTA measurements are reduced significantly compared to far-field methods, particularly compared to direct far-field methods. Moreover, no further components such as reflectors are necessary for performing the measurement, thereby reducing manufacturing costs for the OTA measurement system compared to indirect far-field methods.

Further, placing the at least one RF antenna in the near-field region of the passive RF structure leads to a dynamic range improvement, particularly at high frequencies. The reduced distance between the at least one RF antenna and the passive RF structure is particularly advantageous at high frequencies, as the path loss per distance increases with increasing frequency.

Moreover, the influence of stray signals that may disturb the measurements is reduced, as the intensity of the primary measurement signals, namely the intensity of the stimulus RF signal at the passive RF structure and the intensity of the reflected signal at the at least one RF antenna is large compared to the intensity of the stray signals due to the small distance between the passive RF structure and the at least one RF antenna.

In fact, determining the corrected equivalent source, e.g. in terms of equivalent currents and/or in terms of a spherical mode expansion, up to a finite order inherently filters out the influence of stray signals, as a reflection pattern of the passive RF structure usually is associated with lower order terms, while the stray signals are usually associated with higher order terms.

According to an aspect of the present invention, the positioner unit may be configured to modify an azimuth and/or an elevation angle of the passive RF structure.

However, it is also conceivable that the positioner unit may be configured to modify a location of the passive RF structure.

The analysis module may be integrated into the at least one test and/or measurement instrument.

However, it is also conceivable that the analysis module may be provided separately from the at least one test and/or measurement instrument.

The first polarization and the second polarization may be linear polarizations.

In fact, the first polarization may be associated with the first polarization plane and the second polarization may be associated with a second polarization plan, wherein the first polarization plane and the second polarization plane enclose a predefined angle, for example 90°.

As another example, the first polarization and the second polarization may be circular polarizations.

For example, one of the first polarization and second polarization may be a left-circular polarization, while the other one of the first polarization and the second polarization may be a right-circular polarization.

Obtaining the measurement data may comprise determining the phase and an amplitude of the stimulus RF signal, as well as determining a phase and an amplitude of the reflected signal.

According to an aspect of the present invention, the at least one test and/or measurement instrument at least comprises a vector network analyzer. In other words, the at least one test and/or measurement instrument may be or comprise a vector network analyzer.

However, it is to be understood that any other suitable type of test and/or measurement instrument may be used.

In an embodiment of the present invention, the passive RF structure is or comprises a reconfigurable intelligent surface, RIS.

As another example, the passive RF structure may be or comprise an electromagnetic metasurface.

Another aspect of the present invention provides that the at least one RF antenna comprises exactly one RF antenna, wherein the RF antenna is configured to transmit the stimulus RF signal and to receive the reflected signal. Accordingly, the OTA measurements may be performed by means of the exactly one RF antenna, which may be placed in a near-field region of the passive RF structure. This way, a particularly compact and cost-efficient OTA measurement system is provided.

In a further embodiment of the present invention, the RF antenna is configured to transmit the stimulus RF signal only with the first polarization or with the second polarization, wherein the OTA measurement system comprises an antenna positioner unit that is configured to rotate the RF antenna by a predetermined angle. Accordingly, the RF antenna may be a single-polarization antenna. The first polarization and the second polarization of the stimulus RF signal transmitted to the passive RF structure may be obtained by appropriately rotating the RF antenna to the appropriate orientations by the antenna positioner unit.

In fact, the predetermined angle may correspond to the angle between the first polarization plane and the second polarization plan described above.

The antenna positioner unit may further be configured to adapt a location of the RF antenna. In other words, the antenna positioner unit may be configured to adapt a relative location of the RF antenna and the passive RF structure.

For example, the antenna positioner unit may be configured to move the RF antenna on a sphere or another suitable surface around the passive RF structure, such that a relative location and/or orientation of the RF antenna and of the passive RF structure is modified. In this case, it may be sufficient for the positioner unit to be configured to adapt the elevation angle or the azimuth angle of the RF antenna.

In an embodiment of the present invention, the RF antenna is a dual-polarized RF antenna being configured to transmit the stimulus RF signal with the first polarization and with the second polarization. Accordingly, the single RF antenna may be configured to generate both polarizations being necessary for performing the OTA measurements on the passive RF structure.

While the antenna positioner unit described above may still be provided, it is thus not necessary for the antenna positioner unit to be configured to rotate the RF antenna.

However, the antenna positioner unit may still be configured to adapt a location of the RF antenna as described above.

In a further embodiment of the present invention, the RF antenna is configured to transmit the stimulus RF signal with the first polarization and with the second polarization simultaneously or consecutively. In other words, the OTA measurements associated with the first polarization and with the second polarization of the stimulus RF signal may be performed simultaneously or consecutively.

According to an aspect of the present invention, the RF antenna comprises a first antenna port and a second antenna port, wherein the test and/or measurement instrument comprises a first instrument port and a second instrument port, wherein the first instrument port is connected with the first antenna port, wherein the second instrument port is connected with the second antenna port, and wherein the test and/or measurement instrument is configured to transmit the same stimulus RF signal to the first antenna port and to the second antenna port. Thus, the OTA measurements associated with the first polarization and with the second polarization of the stimulus RF signal may be performed simultaneously or consecutively, wherein both types of OTA measurements are performed with the same stimulus RF signal being transmitted to the passive RF structure, albeit with different polarization.

However, it is also conceivable that the test and/or measurement instrument may be configured to transmit different stimulus RF signals to the first antenna port and to the second antenna port. For example, the different stimulus RF signals may differ in amplitude and/or phase from each other.

A further aspect of the present invention provides that the RF antenna is configured to forward the reflected signal having the first polarization to the first instrument port, wherein the RF antenna is configured to forward the reflected signal having the second polarization to the second instrument port. Accordingly, the different reflected signals having different polarizations may be forwarded and processed by different instrument ports of the test and/or measurement instrument. This way, the reflected signals may be received and processed simultaneously or consecutively.

The OTA measurement system may further comprise a switching module, wherein the switching module has a first port, a second port, and a common port, wherein the RF antenna comprises a first antenna port and a second antenna port, wherein the common port is connected to the test and/or measurement instrument, wherein the first port is connected to the first antenna port, wherein the second port is connected to the second antenna port, and wherein the switching module is configured to selectively forward the stimulus RF signal to the first antenna port or to the second antenna port. Accordingly, the OTA measurements associated with the first polarization and the second polarization may be performed consecutively, namely by consecutively forwarding the stimulus RF signal to the first antenna port and to the second antenna port by the switching module.

In fact, the switching module may have a first switch mode, wherein in the first switch mode the stimulus RF signal is forwarded to the first antenna port, and the reflected signal having the first polarization is forwarded to the test and/or measurement instrument. The switching module may have a second switch mode, wherein in the second switch mode the stimulus RF signal is forwarded to the second antenna port, and the reflected signal having the second polarization is forwarded to the test and/or measurement instrument.

According to an aspect of the present invention, the at least one RF antenna comprises a first RF antenna and a second RF antenna. The first RF antenna is configured to transmit the stimulus RF signal with the first polarization and/or with the second polarization. Alternatively or additionally, the first RF antenna is configured to receive the reflected signal with the first polarization and/or with the second polarization. Further, the second RF antenna is configured to receive the stimulus RF signal with the first polarization and/or with the second polarization. Alternatively or additionally, the second RF antenna is configured to transmit the reflected signal with the first polarization and/or with the second polarization.

Accordingly, the OTA measurements associated with the different polarizations are performed by means of the different RF antennas.

In an exemplary embodiment, the first RF antenna performs the OTA measurement associated with the first polarization, while the second RF antenna performs the OTA measurement associated with the second polarization.

In a further exemplary embodiment, the first RF antenna may be configured as feed antenna transmitting the stimulus signal, while the second RF antenna may be configured as probe antenna receiving the reflected signal, or vice versa

Therein, the first RF antenna and the second RF antenna are physically distinct RF antennas that are provided separately from each other.

The first RF antenna and the second RF antenna may each be placed in a near-field region, particularly in a radiating near-field region of the passive RF structure.

It is noted that the OTA measurement system may comprise a plurality of feed antennas and/or a plurality of probe antennas. The measurements described above and hereinafter may likewise be performed by the additional probe and/or feed antennas, but at two or more spatial points simultaneously. This way, the necessary measurement time can be reduced, but at the cost of enhanced complexity.

A further aspect of the present invention provides that the test and/or measurement instrument comprises a first instrument port and a second instrument port, wherein the first instrument port is connected with the first RF antenna, wherein the second instrument port is connected with the second RF antenna, and wherein the test and/or measurement instrument is configured to transmit the same stimulus RF signal to the first RF antenna and to the second RF antenna. Accordingly, the reflected signal having the first polarization may be received by the first RF antenna and may be forwarded to the first instrument port, while the reflected signal having the second polarization may be received by the second RF antenna and may be forwarded to the second instrument port.

Thus, the OTA measurements associated with the first polarization with the second polarization of the stimulus RF signal may be performed simultaneously or consecutively by the first RF antenna and the second RF antenna, respectively. Both types of OTA measurements may be performed with the same stimulus RF signal being transmitted to the passive RF structure, albeit with different polarization.

However, it is also conceivable that the test and/or measurement instrument may be configured to transmit different stimulus RF signals to the first RF antenna and to the second RF antenna. For example, the different stimulus RF signals may differ in amplitude and/or phase from each other.

The OTA measurement system may further comprise a switching module, wherein the switching module has a first port, a second port, and a common port, wherein the common port is connected to the test and/or measurement instrument, wherein the first port is connected to the first RF antenna, wherein the second port is connected to the second RF antenna, and wherein the switching module is configured to selectively forward the stimulus RF signal to the first RF antenna or to the second RF antenna. Accordingly, the OTA measurements associated with the first polarization and the second polarization may be performed consecutively, namely by consecutively forwarding the stimulus RF signal to the first RF antenna and to the second RF antenna by the switching module.

In fact, the switching module may have a first switch mode, wherein in the first switch mode the stimulus RF signal is forwarded to the first RF antenna, and the reflected signal having the first polarization is forwarded to the test and/or measurement instrument. The switching module may have a second switch mode, wherein in the second switch mode the stimulus RF signal is forwarded to the second RF antenna, and the reflected signal having the second polarization is forwarded to the test and/or measurement instrument.

In an embodiment of the present invention, the analysis module is configured to determine the corrected equivalent source based on an antenna pattern of the at least one RF antenna. In other words, the analysis module may be configured to correct the equivalent source determined for the influence of the at least one RF antenna based on the antenna pattern of the at least one RF antenna.

Therein, the "antenna pattern" may refer to a transmission pattern and/or a receiving pattern of the at least one RF antenna.

The antenna pattern may be known. For example, the antenna pattern may be determined in a calibration measurement of the at least one RF antenna.

In a further embodiment of the present invention, the test and/or measurement instrument is configured to sweep the stimulus RF signal over a predetermined frequency range.

In fact, the stimulus RF signal generated by the at least one test and/or measurement instrument may be a continuous wave, CW, signal or a modulated signal. A frequency of the CW signal or of a carrier signal of the modulated signal may correspond to an operating frequency of the passive RF structure. Accordingly, the passive RF structure may be tested with a frequency of the at stimulus RF signal corresponding to the operating frequency of the passive RF structure.

Therein and hereinafter, the term "operating frequency of the passive RF structure" is understood to denote a central frequency for which the respective passive RF structure is configured. Typically, passive RF structures have a rather narrow frequency bandwidth of operation around the operating frequency.

The frequency of the stimulus RF signal generated may be equal to the operating frequency of the passive RF structure or may be within a certain frequency bandwidth around the operating frequency.

In fact, the test and/or measurement instrument may be configured to sweep the stimulus RF signal over a certain frequency bandwidth around the operating frequency, particularly such that the relevant operating bandwidth of the passive RF structure is covered.

For example, a frequency of the CW signal or of the carrier signal may be between 1 GHz and 10 THz.

However, it is to be understood that the passive RF structure may have an arbitrary operating frequency, i.e. also below 1 GHz or above 10 GHz. Accordingly, the frequency of the CW signal or of the carrier signal may be below 1 GHz or above 10 THz.

The analysis module may be configured to determine a reflection pattern of the passive RF structure based on the corrected equivalent source determined. In other words, the reflection pattern of the passive RF structure may be calculated based on the corrected equivalent source determined rather than being directly measured.

In fact, the reflection pattern determined may comprise a near-field reflection pattern and/or a far-field reflection pattern. Thus, all relevant reflection properties of the passive RF structure can be determined with reduced spatial requirements and in a cost-efficient manner with the OTA measurement system according to the present invention.

In other words, based on the corrected equivalent source determined, the reflection pattern of the passive RF structure can be calculated at an arbitrary location or rather at arbitrary locations.

According to the present invention, the problem further is solved by an OTA measurement method of performing OTA measurements by an OTA measurement system. The OTA measurement method comprises the steps of

- setting, by a positioner unit, a relative position of a passive RF structure and at least one RF antenna;

- generating, by at least one test and/or measurement instrument, a stimulus RF signal;

- transmitting, by the at least one RF antenna, the stimulus RF signal to the passive RF structure in a first polarization and/or in a second polarization;

- receiving, by the at least one RF antenna, a reflected signal from the passive RF structure in the first polarization and/or in the second polarization;

- obtaining, by the at least one test and/or measurement instrument, measurement data based on the stimulus RF signal and the reflected signal, and

- determining, by an analysis module, a corrected equivalent source of the passive RF structure based on a distance between the at least one RF antenna and the passive RF structure and based on the measurement data, wherein the corrected equivalent source is corrected for an influence of the at least one RF antenna.

In fact, the OTA measurement system according to any one of the variants described above may be configured to perform the OTA measurement method.

Likewise, the OTA measurement method may be performed using the OTA measurement system according to any one of the variants described above.

Regarding the advantages and further properties of the OTA measurement method, reference is made to the explanations given above with respect to the OTA measurement system, which also hold for the OTA measurement method and vice versa.

The foregoing aspects and many of the attendant advantages of the claimed subject matter will become more readily appreciated as the same become better understood by reference to the following detailed description, when taken in conjunction with the accompanying drawings, wherein:

- Figure 1 schematically shows a first variant of an OTA measurement system according to the present invention;
- Figure 2 schematically shows a signal processing module of an OTA measurement system according to the present invention;
- Figure 3 schematically shows a second variant of an OTA measurement system according to the present invention;
- Figure 4 schematically shows a third variant of an OTA measurement system according to the present invention;
- Figure 5 schematically shows a fourth variant of an OTA measurement system according to the present invention;
- Figure 6 schematically shows a fifth variant of an OTA measurement system according to the present invention;
- Figure 7 shows a flow chart of an OTA measurement method according to the present invention; and
- Figure 8 shows a diagram illustrating a step of the OTA measurement method of Figure 7.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

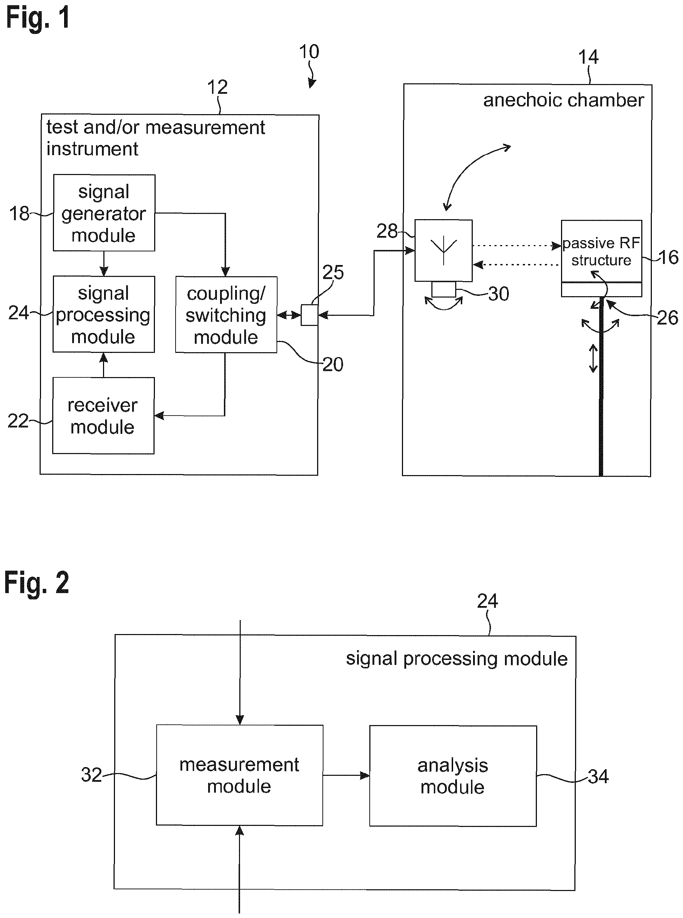

Figure 1 schematically shows an OTA measurement system 10 comprising a test and/or measurement instrument 12 and an anechoic chamber 14.

In general, the OTA measurement system 10 is configured to conduct OTA measurements on a device under test, and more specifically on a passive RF structure 16.

The passive RF structure 16 may, for example, be or comprise a reconfigurable intelligent surface (RIS).

As another example, the passive RF structure 16 may be or comprise an electromagnetic metasurface.

The test and/or measurement instrument 12 may be a vector network analyzer.

As another example, the test and/or measurement instrument 12 may be a network analyzer or a spectrum analyzer.

However, it is to be understood that any other suitable type of test and/or measurement instrument may be used.

The measurement instrument 12 comprises a signal generator module 18 that is configured to generate a stimulus RF signal.

For example, the stimulus RF signal generated by the signal generator module 18 may be a continuous wave signal having a frequency that corresponds to an operating frequency of the passive RF structure 16.

As another example, the stimulus RF signal generated by the signal generator module 18 may be a modulated signal having a carrier frequency that corresponds to the operating frequency of the passive RF structure 16.

In fact, the signal generator module may be configured to sweep the stimulus RF signal over a predetermined frequency range around the operating frequency of the passive RF structure 16.

Optionally, the test and/or measurement instrument 12 further comprises a coupling and/or switching module 20 that is connected to the signal generator module 18 so as to receive the stimulus RF signal generated by the signal generator module 18.

The test and/or measurement instrument 12 further comprises a receiver module 22 that is connected to the coupling and/or switching module 20.

Moreover, the test and/or measurement instrument 12 comprises a signal processing module 24 that is connected to both the signal generator module 18 and the receiver module 22.

The test and/or measurement instrument 12 further comprises an instrument port 25 that is connected to the coupling and/or switching module 20.

In general, the anechoic chamber 14 provides a distortion-free or at least a distortion-reduced environment for testing the passive RF structure 16.

In fact, the anechoic chamber 14 may comprise a housing that is configured to shield an interior of the anechoic chamber 14 from external electromagnetic waves.

Further, absorber elements may be provided in the interior of the anechoic chamber 14 that reduce unwanted reflections within the anechoic chamber 14.

For testing, the passive RF structure 16 is placed in a positioner unit 26 that is located within the anechoic chamber 14.

In general, the positioner unit 26 is configured to hold the passive RF structure 16 in an adaptable position that is suitable for testing the passive RF structure 16.

In fact, the positioner unit 26 is configured to modify the adaptable position.

In the exemplary embodiment shown in Figure 1, the positioner unit 26 is configured to modify an azimuth angle, an elevation angle, and a height of the passive RF structure 16.

However, it is to be understood that any other degrees of freedom of the adaptable position of the passive RF structure 16 may be modified by the positioner unit 26 additionally or instead.

The OTA measurement system 10 further comprises at least one RF antenna 28 that is provided in the anechoic chamber 14.

In the exemplary embodiment shown in Figure 1, the at least one RF antenna 28 is a single RF antenna.

In general, the RF antenna 28 is configured to transmit the stimulus RF signal generated by the signal generator module 18 to the passive RF structure 16, and to receive a corresponding reflected signal from the passive RF structure 16.

More precisely, in the exemplary embodiment show in Figure 1, the RF antenna 28 may be a single-polarization antenna, particularly a linearly polarized antenna, that is configured to transmit the stimulus RF signal with a predefined polarization, and that is configured to receive the reflected signal with the predefined polarization.

Therein, the RF antenna 28 is coupled to the signal generator module 18 via the coupling and/or switching module 20 and via the instrument port 25, which forward the stimulus RF signal generated by the signal generator module 18 to the RF antenna 28.

Further, the RF antenna 28 is connected to the receiver module 22 via the instrument port 25 and via the coupling and/or switching module 20, which forward the reflected signal received by the RF antenna 28 to the receiver module 22.

The OTA measurement system 10 further comprises an antenna positioner unit 30 that is configured to rotate the RF antenna 28 by a predetermined angle, for example 90°.

The antenna positioner unit 30 may further be configured to adapt a location of the RF antenna 28.

For example, the antenna positioner unit 30 may be configured to move the RF antenna 28 on a sphere or another suitable surface around the passive RF structure 16, such that a relative location and/or a relative orientation of the RF antenna 28 and of the passive RF structure 16 are/is modified.

As described above, the positioner unit 26 is configured to hold the passive RF structure 16 in the adaptable position.

Therein, the adaptable position is chosen such that near-field conditions of the transmitted stimulus RF signal are obtained at the passive RF structure 16, and such that near-field conditions of the reflected signal are obtained at the RF antenna 28.

Accordingly, the OTA measurement system 10 is established as a near-field OTA measurement system.

Figure 2 shows the signal processing module 24 in more detail.

The signal processing module 24 comprises a measurement module 32 that is connected to the signal generator module 18 and to the receiver module 22, so as to receive the stimulus RF signal and the reflected signal, respectively.

The signal processing module 24 further comprises an analysis module 34 that is connected to the measurement module 32 downstream of the measurement module 32.

It is noted that while the analysis module 34 is shown to be integrated into the test and/or measurement instrument 12 in Figures 1 and 2, it is also conceivable that the analysis module 34 may be provided separately from the test and/or measurement instrument 12, e.g. in a further test and/or measurement instrument or in an external computer device such as a personal computer, a laptop, a notebook, a server, or another suitable type of smart device.

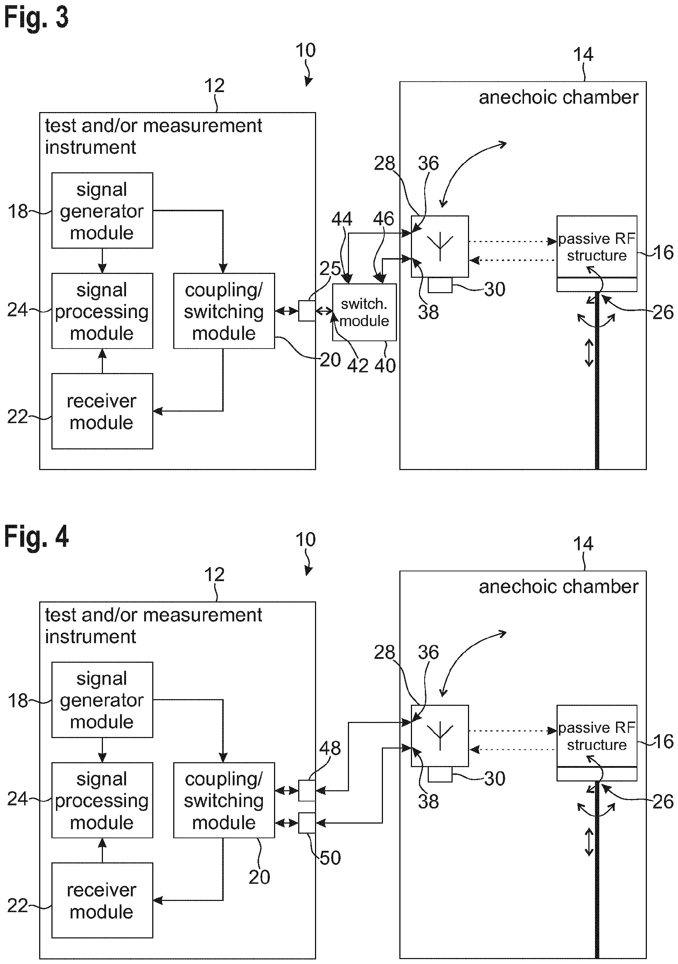

Figure 3 shows a further exemplary variant of the OTA measurement system 10, wherein only the differences compared to the first variant described above with reference to Figure 1 are explained hereinafter.

In this exemplary embodiment, the RF antenna 28 may be a dual-polarized RF antenna, i.e. the RF antenna 28 is configured to transmit the stimulus RF signal with two different polarizations simultaneously or consecutively.

In fact, the RF antenna 28 comprises a first antenna port 36 and a second antenna port 38 that are each configured to receive the stimulus signal.

The RF antenna 28 is configured to transmit the stimulus signal received via the first antenna port 36 with a first polarization, and to transmit the stimulus signal received via the second antenna port 38 with a second polarization.

In the exemplary embodiment shown in Figure 3, the OTA measurement system 10 further comprises a switching module 40.

The switching module 40 comprises a common port 42 that is connected to the instrument port 25.

The switching module 40 further comprises a first port 44 that is connected to the first antenna port 36, as well as a second port 46 that is connected to the second antenna port 38.

In general, the switching module 40 is configured to selectively forward the stimulus RF signal from the test and/or measurement instrument 12 to the first antenna port 36 or to the second antenna port 38.

In the exemplary embodiment shown in Figure 3, it is not necessary (but still possible) that the antenna positioner unit 30 is configured to rotate the RF antenna 28 by the predetermined angle.

The antenna positioner unit 30 may be configured to adapt a location of the RF antenna 28 as described above.

Figure 4 shows a further variant of the OTA measurement system 10, wherein only the differences compared to the variant described above with reference to Figure 3 are explained hereinafter.

In this exemplary embodiment, the test and/or measurement instrument 12 comprises a first instrument port 48 and a second instrument port 50.

The first instrument port 48 and the second instrument port 50 are each connected to the coupling and/or switching module 20.

The first instrument port 48 is connected to the first antenna port 36, while the second instrument port 50 is connected to the second antenna port 38.

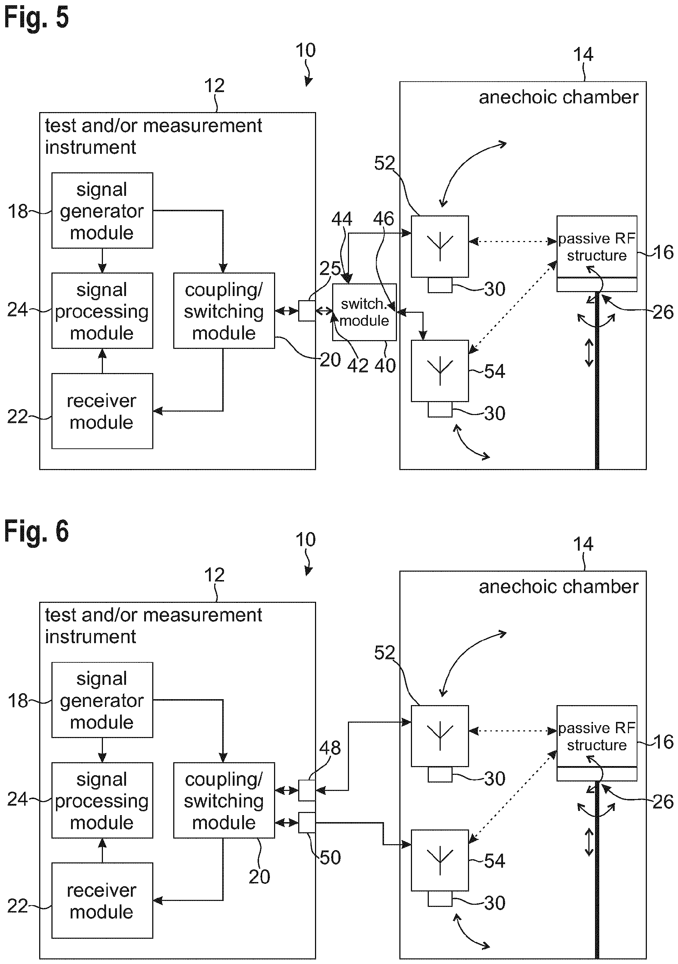

Figure 5 shows a further variant of the OTA measurement system 10, wherein only the differences compared to the variant described above with reference to Figure 3 are explained hereinafter.

In this exemplary embodiment, the OTA measurement system 10 comprises a first RF antenna 52 and a second RF antenna 54.

The first RF antenna 52 is connected to the first port 44 of the switching module 40.

The second RF antenna 54 is connected to the second port 46 of the switching module 40.

Therein, the first RF antenna 52 may be a single-polarization RF antenna or a dual-polarization antenna.

The first RF antenna 52 may be configured as a feed antenna and/or as a probe antenna, as will be described in more detail below.

Likewise, the second RF antenna 54 may be a single-polarization RF antenna or a dual-polarization antenna.

The second RF antenna 54 may be configured as a feed antenna and/or as a probe antenna.

The antenna positioner unit 30 may be configured to rotate the first RF antenna 52 and/or the second RF antenna 54.

Alternatively or additionally, the antenna positioner unit 30 may be configured to adapt a location of the first RF antenna 52, and/or a location of the second RF antenna 54.

Figure 6 shows a further variant of the OTA measurement system 10, wherein only the differences compared to the variant described above with reference to Figure 4 are explained hereinafter.

In this exemplary embodiment, the OTA measurement system 10 comprises a first RF antenna 52 and a second RF antenna 54.

The first RF antenna 52 is connected to the first instrument port 48.

The second RF antenna 54 is connected to the second instrument port 50.

Therein, the first RF antenna 52 may be a single-polarization RF antenna or a dual-polarization antenna.

The first RF antenna 52 may be configured as a feed antenna and/or as a probe antenna, as will be described in more detail below.

Likewise, the second RF antenna 54 may be a single-polarization RF antenna or a dual-polarization antenna.

The second RF antenna 54 may be configured as a feed antenna and/or as a probe antenna.

The antenna positioner unit 30 may be configured to rotate the first RF antenna 52 and/or the second RF antenna 54.

Alternatively or additionally, the antenna positioner unit 30 may be configured to adapt a location of the first RF antenna 52, and/or a location of the second RF antenna 54.

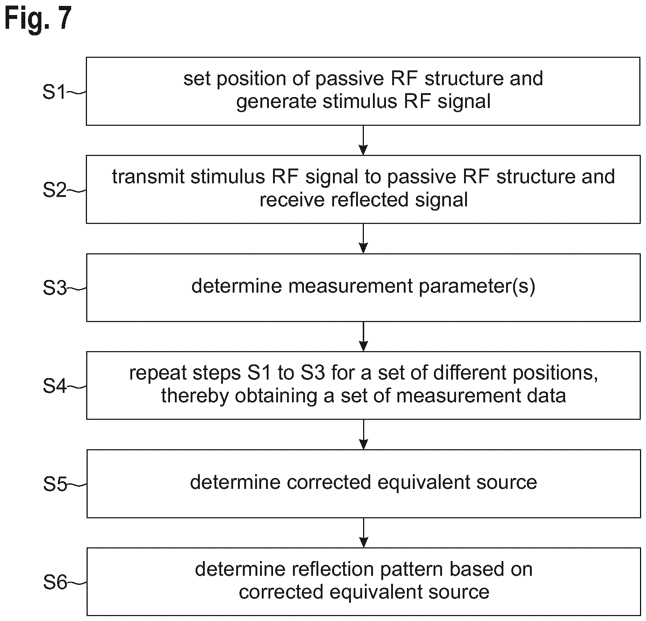

The OTA measurement system 10 according to any one of the variants described above is configured to perform an OTA measurement method that is described hereinafter with reference to Figure 7.

Hereinafter, the term "relative position" refers to a position of the passive RF structure 16 relative to the RF antenna(s) describe above.

A relative position of the passive RF structure 16 is set by the positioner unit 26 and/or by the antenna positioner unit 30, and a stimulus RF signal is generated by the signal generator module 18 (step S1).

The stimulus RF signal is transmitted to the passive RF structure 16 with a first polarization and with a second polarization, and a corresponding reflected signal that is reflected by the passive RF structure 16 is received with a first polarization and with a second polarization (step S2).

In the exemplary embodiment of Figure 1, with the RF antenna 28 being a single-polarization antenna, the stimulus signal may first be transmitted with the first polarization by the RF antenna 28 and the corresponding reflected signal is received by the RF antenna 28 with the first polarization.

Afterwards, the RF antenna 28 may be rotated by the predetermined angle by means of the antenna positioner unit 30. The stimulus signal may then be transmitted with the second polarization by the RF antenna 28 and the corresponding reflected signal is received by the RF antenna 28 with the second polarization.

In the exemplary embodiment of Figure 3, with the RF antenna 28 being a dual-polarization antenna, the stimulus signal may be transmitted with the first polarization and with the second polarization consecutively.

In fact, the switching module 40 may have a first switch mode, wherein in the first switch mode the stimulus RF signal is forwarded to the first antenna port 36, wherein the stimulus RF signal having the first polarization is transmitted and the reflected signal having the first polarization is received by the RF antenna 28.

The switching module 40 may have a second switch mode, wherein in the second switch mode the stimulus RF signal is forwarded to the second antenna port 38, wherein the stimulus RF signal having the second polarization is transmitted and the reflected signal having the second polarization is received by the RF antenna 28.

Therein, the same stimulus signal may be generated and forwarded to the first antenna port 36 and the second antenna port 38.

However, it is also conceivable that different stimulus signals may be generated and forwarded to the first antenna port 36 and the second antenna port 38.

For example, the different stimulus signals may have different amplitudes and/or phases.

In the exemplary embodiment of Figure 4, with the RF antenna 28 being a dual-polarization antenna, the stimulus signal may be transmitted with the first polarization and with the second polarization simultaneously or consecutively.

In fact, the stimulus RF signal may be forwarded to the first antenna port 36 via the coupling and/or switching module 20 and the first instrument port 48, while the same or a different stimulus RF signal may be forwarded to the second antenna port 38 via the coupling and/or switching module 20 and the second instrument port 50.

The stimulus RF signal may be forwarded to the first antenna port 36 and to the second antenna port simultaneously or consecutively.

Referring to the exemplary variant of the OTA measurement system 10 shown in Figure 5, there are a plurality of possible variants of performing step S2.

According to a first variant, the RF antennas 52, 54 may each be a single-polarization antenna, and each RF antenna 52, 54 may be configured as both feed antenna and probe antenna.

In this variant, in a first switch mode of the switching module 40, the stimulus RF signal may be forwarded to the first RF antenna 52 by the switching module 40. The first RF antenna 52 may transmit the stimulus signal with the first polarization and may receive the corresponding reflected signal with the first polarization.

Afterwards, in a second switching mode of the switching module 40, the same or a different stimulus RF signal may be forwarded to the second RF antenna 54 by the switching module 40. The second RF antenna 54 may transmit the stimulus signal with the second polarization and may receive the corresponding reflected signal with the second polarization.

According to a second variant, the RF antennas 52, 54 may each be a single-polarization antenna, wherein the first RF antenna 52 is configured as feed antenna and the second RF antenna 54 is configured as probe antenna.

Accordingly, the stimulus RF signal may be forwarded to the first RF antenna 52 by the coupling and/or switching module 20 and the switching module 40.

The stimulus RF signal having the first polarization is transmitted by the first RF antenna 52, and the corresponding reflected signal having the first polarization is received by the second RF antenna 54.

Afterwards, the first RF antenna 52 and the second RF antenna 54 may be rotated by the antenna positional unit 30 by the predefined angle, respectively.

The stimulus RF signal having the second polarization is then transmitted by the first RF antenna 52, and the corresponding reflected signal having the second polarization is received by the second RF antenna 54.

The reflected signal received by the second RF antenna 54 may be forwarded to the test and/or measurement instrument 12 by the switching module 40.

It is also conceivable that step S2 as described above is performed for a first switch mode of the switching module 40, and that the switching module 40 may have a second switch mode for which the second RF antenna 54 is configured as feed antenna, while the first RF antenna 52 is configured as probe antenna.

According to a third variant, the RF antennas 52, 54 may each be a dual-polarization antenna, wherein the first RF antenna 52 is configured as feed antenna and the second RF antenna 54 is configured as probe antenna.

Therein, the first RF antenna 52 may transmit the stimulus RF signal having the first polarization and the second polarization simultaneously or consecutively.

Accordingly, the reflected signal having the first polarization and the reflected signal having the second polarization may be received by the second RF antenna 54 simultaneously or consecutively.

It is noted that combinations of the variants described above, particularly combinations of a single-polarization RF antenna and a dual-polarization antenna, are also possible.

Referring to the exemplary variant of the OTA measurement system 10 shown in Figure 6, the plurality of possibilities described above with respect to Figure 5 likewise apply, wherein the test and/or measurement instrument 12 is configured to forward the stimulus signal to the respective RF antenna(s) simultaneously or consecutively.

Irrespective of the variant, the reflection signal having the first polarization and the reflection signal having the second polarization are forwarded to the test and/or measurement instrument 12, particularly to the receiver module 22.

The receiver module 22 processes the reflected signals appropriately and forwards the reflected signals to the signal processing module 24.

For example, the receiver module 22 may be configured to down-convert the reflected signals in frequency, filter the reflected signals, and/or digitize the reflected signals.

At least one measurement parameter is obtained by the signal processing module 24, or more precisely by the measurement module 32 based on the reflected signal having the first polarization, based on the reflected signal having the second polarization, and based on the stimulus RF signal (step S3).

Therein, the measurement module 32 may determine an amplitude and phase of the stimulus RF signal, an amplitude and a phase of the reflected signal having the first polarization, and an amplitude and a phase of the reflected signal having the second polarization.

Steps S1 to S3 describe above are repeated for a plurality of different relative positions of the passive RF structure 16, thereby obtaining a set of measurement data (step S4).

The set of measurement data comprises the at least one measurement parameter for each of the different relative positions of the passive RF structure 16.

In other words, the positioner unit 26 and/or the antenna positioner unit 30 may modify the relative position to a set of different relative positions consecutively, and the at least one measurement parameter may determined at the different relative positions, respectively.

For example, the azimuth angle and/or the elevation angle of the passive RF structure 16 may be adapted between the different positions.

Therein, the set of different relative positions may be chosen such that at least the complete solid angle range that is relevant for the functionality of the passive RF structure is covered by the set of different relative positions.

Further, the set of different relative positions may be chosen such that for each relative position the passive RF structure 16 is in a radiating near-field region of the at least one RF antenna and vice versa.

A corrected equivalent source of the passive RF structure 16 is determined by the analysis module 34 based on a known distance between the at least one RF antenna and the passive RF structure 16, and based on the set of measurement data (step S5).

Therein, the distance between the at least one RF antenna and the passive RF structure 16 is, for example, known due to a known respective position of the positioner unit 26 and of the antenna positioner unit 30.

In general, the corrected equivalent source of the passive RF structure 16 corresponds to an equivalent source for the passive RF structure 16 that has been corrected for an influence of the at least one RF antenna, i.e. for the influence of the RF antenna 28 or for the influences of the RF antennas 52, 54.

In fact, the analysis module 34 may determine the corrected equivalent source based on a known antenna pattern of the at least one RF antenna, i.e. based on a known antenna pattern of the RF antenna 28 or of the RF antennas 52, 54.

Therein, the antenna pattern of the at least one RF antenna for the respective polarization of the stimulus RF signal may be taken into account.

Particularly, the antenna pattern of the RF antenna 28, of the first RF antenna 52, and/or of the second RF antenna 54 for the different orientations may be taken into account, namely for the case of the at least one RF antenna being a single-polarization antenna that is rotated between measurements.

As another example, the antenna pattern of the RF antenna 28, of the first RF antenna 52, and/or of the second RF antenna 54 for the different polarizations may be taken into account, namely for the case of the at least one RF antenna being a dual-polarization antenna.

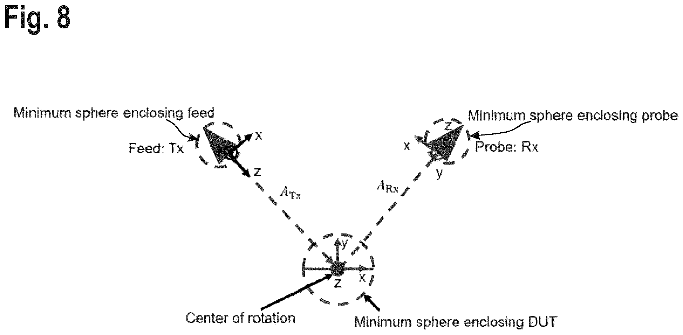

For the exemplary case of a feed antenna and a probe antenna (i.e. for example for the embodiments shown in Figures 5 and 6), this is illustrated in Figure 8.

The feed antenna has a known distance $A_{Tx}$ from the passive RF structure 16 ("DUT" in Figure 8). The probe antenna has a known distance $A_{Rx}$ from the passive RF structure 16.

A signal measured by the probe antenna can be described as

$$w_{\mathrm{r}}(A_{\mathrm{Rx}}, \chi, \theta, \phi) = \frac{v}{2} \sum_{\substack{smn \\ \sigma\mu\nu}} T_{smn}^{\mathrm{DUT}} e^{im\phi} d_{\mu m}^{n}(\theta) e^{i\mu\chi} C_{\sigma\mu\nu}^{sn(c)}(kA_{\mathrm{Rx}}) R_{\sigma\mu\nu}^{\mathrm{p}}$$

Therein, v is the excitation amplitude, $T^{DUT}$ describes the complex transmit spherical mode coefficients of the DUT, i.e. of the passive RF structure 16, $R^p$ describes the complex receive spherical mode coefficients of the probe antenna, i.e. the at least one RF antenna receiving the reflected signal, and the remaining factors described the relative orientation, polarization, and position between the probe antenna and the passive RF structure 16.

Further, a signal received by the passive RF structure 16 that is transmitted by the feed antenna can be described as

$$w_{\mathrm{t}}(A_{\mathrm{Tx}}, \chi, \theta, \phi) = \frac{v}{2} \sum_{\substack{smn \\ \alpha\beta\gamma}} R_{smn}^{\mathrm{DUT}} e^{im\phi} d_{\beta m}^{n}(\theta) e^{i\beta\chi} C_{\alpha\beta\gamma}^{sn(c)}(kA_{\mathrm{Tx}}) T_{\alpha\beta\gamma}^{\mathrm{f}}$$

Therein, $T^f$ describes the complex transmit spherical mode coefficients of the feed antenna, i.e. the at least one RF antenna transmitting the stimulus RF signal, and $R^{DUT}$ describes the complex receive spherical mode coefficients of the DUT, i.e. of the passive RF structure 16.

The overall measured signal w is then given by a product of $w_r$ and $w_t$, i.e.

$$w(A_{\mathrm{Tx}}, A_{\mathrm{Rx}}, \chi, \theta, \phi) = w_{\mathrm{t}}(A_{\mathrm{Tx}}, \chi, \theta, \phi) w_{\mathrm{r}}(A_{\mathrm{Rx}}, \chi, \theta, \phi)$$

Using symmetry relations, particularly reciprocity relations, for the passive RF structure the feed antenna, and/or the probe antenna this can be transformed into

$$w(A_{\mathrm{Tx}}, A_{\mathrm{Rx}}, \chi, \theta, \phi) = \frac{v}{2} \left\{ \sum_{\substack{smn \\ \alpha\beta\gamma \\ \sigma\mu\nu}} (-1)^{m+n} T_{s,-m,n}^{2\mathrm{DUT}} e^{2im\phi} d_{\beta m}^n(\theta) e^{i\beta\chi} C_{\alpha\beta\gamma}^{sn(c)}(kA_{\mathrm{Tx}})(-1)^\beta R_{\alpha,-\beta,\gamma}^{\mathrm{f}} d_{\mu m}^n(\theta) e^{i\mu\chi} C_{\sigma\mu\nu}^{sn(c)}(kA_{\mathrm{Rx}}) R_{\sigma\mu\nu}^{\mathrm{p}} \right\}$$

This equation for the overall measured signal w can then be solved for the coefficients TZ°mn, i.e. for the complex transmit spherical mode coefficients of the passive RF structure 16.

In this case, the complex transmit spherical mode coefficients of the passive RF structure 16 are the corrected equivalent source determined by the analysis module 34.

A reflection pattern of the passive RF structure 16 may be determined by the analysis module 34 based on the corrected equivalent source determined (step S6).

In fact, the reflection pattern can be calculated based on the corrected equivalent source determined.

Therein, the reflection pattern determined may comprise a near-field reflection pattern and/or a far-field reflection pattern.

In general, the reflection pattern of the passive RF structure 16 may be determined for an arbitrary distance from the passive RF structure 16 based on the corrected equivalent source determined.

In other words, while the measurements may be performed at a certain distance from the passive RF structure 16, namely in a near-field region, the reflection pattern may be determined or rather calculated for arbitrary distances based on the corrected equivalent source determined.

The reflection pattern determined may be a monostatic OTA reflection pattern of the passive RF structure 16 or a bistatic OTA reflection pattern.

The monostatic OTA reflection pattern describes the reflectivity properties of the passive RF structure 16 receiving an RF signal from a source back to the source for a plurality of different relative positions of the passive RF structure 16 and the source, particularly for a plurality of different relative orientations.

Particularly, the monostatic OTA reflection pattern may be determined for the exemplary embodiments of the OTA measurement system 10 shown in Figures 1, 3, 4, 5, and/or 6.

The bistatic OTA reflection pattern describes the reflectivity properties of the passive RF structure 16 receiving an RF signal from a source to a sink, namely for a plurality of different relative positions of the passive RF structure 16, the source, and the sink.

The bistatic OTA reflection pattern may be determined for the exemplary embodiments of the OTA measurement system 10 shown in Figures 5 and/or 6.

Based on the reflection pattern determined, a performance of the passive RF structure 16 may be assessed, e.g. by comparing the reflection pattern determined with an ideal reflection pattern.

Particularly, faults of the passive RF structure 16 may be identified based on the reflection pattern determined.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated module (ASIC), a field-programmable gate array (FPGA), a system on a chip (SoC), or the like, or any combinations thereof, and can include discrete digital or analog module elements or electronics, or combinations thereof. In an embodiment, circuitry includes hardware module implementations (e.g., implementations in analog circuitry, implementations in digital circuitry, and the like, and combinations thereof).

In an embodiment, circuitry includes combinations of modules and computer program products having software or firmware instructions stored on one or more computer readable memories that work together to cause a device to perform one or more protocols, methodologies or technologies described herein. In an embodiment, circuitry includes modules, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

Claims

1. An over-the-air, OTA, measurement system for testing a passive radio frequency, RF, structure (16),

wherein the OTA measurement system (10) comprises a positioner unit (26) that is configured to hold the passive RF structure (16) in an adaptable position, wherein the positioner unit (26) is configured to modify the adaptable position,

wherein the OTA measurement system (10) further comprises at least one test and/or measurement instrument (12), wherein the at least one test and/or measurement instrument (12) is configured to generate a stimulus RF signal,

wherein the OTA measurement system (10) further comprises at least one RF antenna (28; 52, 54) being connected to the at least one test and/or measurement instrument (12), wherein the at least one RF antenna (28; 52, 54) is configured to receive the stimulus RF signal from the test and/or measurement instrument (12), and to transmit the stimulus RF signal to the passive RF structure (16) in a first polarization and/or in a second polarization,

wherein the at least one RF antenna (28; 52, 54) is further configured to receive a reflected signal from the passive RF structure (16) in the first polarization and/or in the second polarization, and to transmit the received reflected signal to the test and/or measurement instrument (12),

wherein the at least one test and/or measurement instrument (12) further is configured to obtain measurement data based on the stimulus RF signal and the reflected signal, and

wherein the OTA measurement system (10) comprises an analysis module (34), wherein the analysis module (34) is configured to determine a corrected equivalent source of the passive RF structure (16) based on a distance between the at least one RF antenna (28; 52, 54) and the passive RF structure (16) and based on the measurement data, wherein the corrected equivalent source is corrected for an influence of the at least one RF antenna (28; 52, 54).

2. The OTA measurement system of claim 1, wherein the passive RF structure (16) is or comprises a reconfigurable intelligent surface, RIS.

3. The OTA measurement system of claim 1, wherein the at least one RF antenna (28) comprises exactly one RF antenna, wherein the RF antenna (28) is configured to transmit the stimulus RF signal and to receive the reflected signal.

4. The OTA measurement system of claim 3, wherein the RF antenna (28) is configured to transmit the stimulus RF signal only with the first polarization or with the second polarization, and wherein the OTA measurement system (10) comprises an antenna positioner unit (30) that is configured to rotate the RF antenna (28) by a predetermined angle, particularly wherein the antenna positioner unit (30) further is configured to adapt a location of the RF antenna (28).

5. The OTA measurement system of claim 3, wherein the RF antenna (28) is a dual-polarized RF antenna being configured to transmit the stimulus RF signal with the first polarization and with the second polarization, particularly wherein the RF antenna (28) is configured to transmit the stimulus RF signal with the first polarization and with the second polarization simultaneously or consecutively.

6. The OTA measurement system of claim 5, wherein the RF antenna (28) comprises a first antenna port (36) and a second antenna port (38), wherein the test and/or measurement instrument (12) comprises a first instrument port (48) and a second instrument port (50), wherein the first instrument port (48) is connected with the first antenna port (36), wherein the second instrument port (50) is connected with the second antenna port (38), and wherein the test and/or measurement instrument (12) is configured to transmit the same stimulus RF signal to the first antenna port (36) and to the second antenna port (38), particularly wherein the RF antenna (28) is configured to forward the reflected signal having the first polarization to the first instrument port (48), and wherein the RF antenna (28) is configured to forward the reflected signal having the second polarization to the second instrument port (50).

7. The OTA measurement system of claim 5, further comprising a switching module (40), wherein the switching module (40) has a first port (44), a second port (46), and a common port (42), wherein the RF antenna (28) comprises a first antenna port (36) and a second antenna port (38), wherein the common port (42) is connected to the test and/or measurement instrument (12), wherein the first port (44) is connected to the first antenna port (36), wherein the second port (46) is connected to the second antenna port (38), and wherein the switching module (40) is configured to selectively forward the stimulus RF signal to the first antenna port (36) or to the second antenna port (38).

8. The OTA measurement system of claim 7, wherein the switching module (40) has a first switch mode, wherein in the first switch mode the stimulus RF signal is forwarded to the first antenna port (36), and the reflected signal having the first polarization is forwarded to the test and/or measurement instrument (12), and
wherein the switching module (40) has a second switch mode, wherein in the second switch mode the stimulus RF signal is forwarded to the second antenna port (38), and the reflected signal having the second polarization is forwarded to the test and/or measurement instrument (12).

9. The OTA measurement system of claim 1 or 2, wherein the at least one RF antenna (52, 54) comprises a first RF antenna (52) and a second RF antenna (54), wherein the first RF antenna (52) is configured to transmit the stimulus RF signal with the first polarization and/or with the second polarization, and/or wherein the first RF antenna (52) is configured to receive the reflected signal with the first polarization and/or with the second polarization, and wherein the second RF antenna (54) is configured to receive the stimulus RF signal with the first polarization and/or with the second polarization, and/or wherein the second RF antenna (54) is configured to transmit the reflected signal with the first polarization and/or with the second polarization.

10. The OTA measurement system of claim 9, wherein the test and/or measurement instrument (12) comprises a first instrument port (48) and a second instrument port (50), wherein the first instrument port (48) is connected with the first RF antenna (52), wherein the second instrument port (50) is connected with the second RF antenna (54), and wherein the test and/or measurement instrument (12) is configured to transmit the same stimulus RF signal to the first RF antenna (52) and to the second RF antenna (54).

11. The OTA measurement system of claim 9 or 10, further comprising a switching module (40), wherein the switching module (40) has a first port (44), a second port (46), and a common port (42), wherein the common port (42) is connected to the test and/or measurement instrument (12), wherein the first port (44) is connected to the first RF antenna (52), wherein the second port (46) is connected to the second RF antenna (54), and wherein the switching module (40) is configured to selectively forward the stimulus RF signal to the first RF antenna (52) or to the second RF antenna (54),
particularly wherein the switching module (40) has a first switch mode, wherein in the first switch mode the stimulus RF signal is forwarded to the first RF antenna (52), and the reflected signal having the first polarization is forwarded to the test and/or measurement instrument (12), and wherein the switching module (40) has a second switch mode, wherein in the second switch mode the stimulus RF signal is forwarded to the second RF antenna (54), and the reflected signal having the second polarization is forwarded to the test and/or measurement instrument (12).

12. The OTA measurement system according to any one of the preceding claims, wherein the analysis module (34) is configured to determine the corrected equivalent source based on an antenna pattern of the at least one RF antenna (28; 52, 54).

13. The OTA measurement system according to any one of the preceding claims, wherein the test and/or measurement instrument (12) is configured to sweep the stimulus RF signal over a predetermined frequency range.

14. The OTA measurement system according to any one of the preceding claims, wherein the analysis module (34) is configured to determine a reflection pattern of the passive RF structure (16) based on the corrected equivalent source determined, particularly wherein the reflection pattern determined comprises a near-field reflection pattern and/or a far-field reflection pattern.

15. An OTA measurement method of performing OTA measurements by an OTA measurement system (10), the OTA measurement method comprising the steps of

- setting, by a positioner unit (26), a relative position of a passive RF structure (16) and at least one RF antenna (28; 52, 54);
- generating, by at least one test and/or measurement instrument (12), a stimulus RF signal;
- transmitting, by the at least one RF antenna (28; 52, 54), the stimulus RF signal to the passive RF structure (16) in a first polarization and/or in a second polarization;
- receiving, by the at least one RF antenna (28; 52, 54), a reflected signal from the passive RF structure (16) in the first polarization and/or in the second polarization;
- obtaining, by the at least one test and/or measurement instrument (12), measurement data based on the stimulus RF signal and the reflected signal, and
- determining, by an analysis module (34), a corrected equivalent source of the passive RF structure (16) based on a distance between the at least one RF antenna (28; 52, 54) and the passive RF structure (16) and based on the measurement data, wherein the corrected equivalent source is corrected for an influence of the at least one RF antenna (28; 52, 54).

# Fig. 1

# Fig. 2

Fig. 3

Fig. 4

## Fig. 5

## Fig. 6

# Fig. 7

S1 — set position of passive RF structure and generate stimulus RF signal

S2 — transmit stimulus RF signal to passive RF structure and receive reflected signal

S3 — determine measurement parameter(s)

S4 — repeat steps S1 to S3 for a set of different positions, thereby obtaining a set of measurement data

S5 — determine corrected equivalent source

S6 — determine reflection pattern based on corrected equivalent source

# Fig. 8

Europäisches
Patentamt

European
Patent Office

Office européen
des brevets

# EUROPEAN SEARCH REPORT

**Application Number**

EP 24 18 8022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI YIFA ET AL: "An Automated Over-the-Air Radiated Testing Platform for Reconfigurable Intelligent Surface", 2024 18TH EUROPEAN CONFERENCE ON ANTENNAS AND PROPAGATION (EUCAP), EUROPEAN ASSOCIATION OF ANTENNAS AND PROPAGATION, 17 March 2024 (2024-03-17), pages 1-5, XP034594252, DOI: 10.23919/EUCAP60739.2024.10501131 [retrieved on 2024-04-26] * abstract * * section II; page 2 * * section III.A; page 2 - page 3 * * section III.B; page 4 * | 1-15 | INV. H04B17/00 H04B17/21 |
| X | KISS FLORIAN ET AL: "Measurement Environment for RIS Enhanced Wireless Channels", 2023 IEEE 24TH INTERNATIONAL WORKSHOP ON SIGNAL PROCESSING ADVANCES IN WIRELESS COMMUNICATIONS (SPAWC), IEEE, 25 September 2023 (2023-09-25), pages 381-385, XP034464348, DOI: 10.1109/SPAWC53906.2023.10304485 [retrieved on 2023-11-06] * figures 2,3 * * section II.A * * section III.A * * section IV * | 1-15 | **TECHNICAL FIELDS SEARCHED (IPC)** H04B |

The present search report has been drawn up for all claims

| Place of search | Date of completion of the search | Examiner |
|---|---|---|
| The Hague | 3 December 2024 | Sklavos, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)